# EUROPÄISCHE PATENTSCHRIFT

(11) **EP 2 923 865 B1**
(45) Veröffentlichungstag und Bekanntmachung des Hinweises auf die Patenterteilung: **08.05.2019**
(21) Anmeldenummer: 15157424.1
(22) Anmeldetag: 03.03.2015
(51) Int. Cl.: B60G 21/05

(54) **Kraftfahrzeugachse und Verfahren zur Herstellung eines Querträgers für eine Kraftfahrzeugachse**
Motor vehicle axle and method for the manufacture of a crossbeam for an axle of a motor vehicle
Axe de véhicule automobile et procédé de fabrication d'un longeron pour un axe de véhicule automobile

(30) Priorität: 24.03.2014 DE 102014104014
(43) Veröffentlichungstag der Anmeldung: 30.09.2015
(73) Patentinhaber: Benteler Automobiltechnik GmbH, 33102 Paderborn (DE)
(72) Erfinder: Schultz, Erik, 33100 Paderborn (DE); Niggemeyer, Norbert, 33102 Paderborn (DE); Bürger, Manfred, 33181 Bad Wünnenberg (DE)
(74) Vertreter: Griepenstroh, Jörg

(56) Entgegenhaltungen:
- WO-A1-2014/138850
- DE-A1- 19 949 341
- DE-A1-102009 050 058
- DE-A1-102014 221 472
- JP-A- 2000 052 733
- JP-A- 2000 094 917

## Beschreibung

Die Erfindung betrifft eine Kraftfahrzeugachse, umfassend zwei Längslenker und einen diesen verbindenden Querträger, wobei der Querträger ein offenes Profil mit U-förmigem Querschnitt mit einem Steg und längsseitig davon abgewinkelten Seitenschenkeln aufweist, wobei die Öffnung des Profils in Einbaulage zur Fahrbahn hin weist. Die Erfindung betrifft außerdem ein Verfahren zur Herstellung eines Querträgers für eine entsprechende Kraftfahrzeugachse.

Erfindungsgemäße Achskonstruktionen werden zumeist auch als Verbundlenkerachsen bezeichnet. An diese stellen sich ganz bestimmte Anforderungen, um ein vorgesehenes Fahrverhalten und entsprechenden Fahrkomfort zu erzeugen.

Bei der Gestaltung von Querträgern für Verbundlenkerachsen ist im Stand der Technik eine Vielzahl von Varianten bekannt. Beispielsweise offenbaren die WO 2013/185217 A1 oder auch die DE 10 2007 058 582 A2 Querträger für Kraftfahrzeugachsen, die aus einem rohrförmigen Profil gefertigt werden. Der Mittelabschnitt dieser Profile wird derart umgeformt, dass dort ein doppelwandiges Profil mit einem im Wesentlichen U-förmigen Querschnitt erzeugt wird. Dadurch wird dieser Bereich torsionsweich gehalten, wohingegen die rohrförmig verbleibenden Endabschnitte der Profile eine entsprechend höhere Steifigkeit aufweisen.

Die DE 10 2009 050 058 A1 offenbart eine Verbundlenkerachse für ein Kraftfahrzeug, bei der der Querträger aus einer umgeformten Platine gebildet ist und einen U-förmigen Querschnitt aufweist. In den Endbereichen ist der Querträger durch Versteifungselemente verstärkt, wobei der Querträger im Bereich der Enden der Versteifungselemente eine erhöhte Wanddicke aufweist, wodurch ein sehr weicher Steifigkeitsübergang vom torsionsweichen Mittelabschnitt des Querträgers in dessen Endbereich erzielt wird.

In der DE 10 2009 004 441 A1 wird eine Abmilderung von Steifigkeitssprüngen dadurch erzielt, dass ein Federteller vorteilhaft an den Endbereichen des Querträgers angebracht wird.

Aus der JP 2000-052733 A ist ein Verfahren zur Herstellung eines Querträgers für eine Kraftfahrzeugachse bekannt, bei der eine Platine zunächst beschnitten wird und aus der beschnittenen Platine der Querträger geformt wird. Auch bei diesem Querträger wird der Querschnitt über dessen Länge variiert, um die Steifigkeiten in entsprechender Weise einzustellen.

Auch aus der DE 199 49 341 A1 geht ein Querträger für eine Kraftfahrzeugachse hervor. Hierbei wird ebenfalls eine Platine zunächst beschnitten, wobei der Beschnitt derart ausgeführt wird, dass beim nachfolgenden Umformen der Platine zu einem im Wesentlichen rohrförmigen Querträger der Mittelabschnitt des entstehenden Profils nicht vollständig geschlossen wird, so dass in diesem Bereich eine geringere Torsionssteifigkeit vorliegt als in den Endbereichen des Profils.

Die JP 2000-094917 A offenbart eine Kraftfahrzeugachse mit einem Querträger, dessen Höhe zu den Enden des Trägers hin graduell verringert wird, um Torsionseigenschaften einzustellen.

Die meisten Verbundlenkerachsen sollen eine geringe Rollsteifigkeit oder Torsionssteifigkeit aufweisen. Das bedeutet, dass sich der Querträger der Verbundlenkerachse um seine Längsachse verdrehen kann. Insbesondere beim wechselseitigen Einfedern der beiden Räder, die durch die Verbundlenkerachse verbunden werden, ist diese Eigenschaft von Bedeutung.

Gleichzeitig sollen aber unter Seitenkrafteinwirkung sowohl Spur- als auch Sturzeinstellungen möglichst erhalten bleiben. Das bedeutet, dass die Verbundlenkerachse eine hohe Spur- und Sturzsteifigkeit aufweisen soll. Dies wird erreicht, indem der Querträger der Verbundlenkerachse eine hohe Biegesteifigkeit unter Seitenkrafteinwirkung besitzt. Eine solche hohe Biegesteifigkeit ist durch die entsprechende Anpassung der geometrischen Gegebenheiten des Querträgers erreichbar. Ein Querträger mit einem rechteckförmigen oder U-förmigen Profilquerschnitt hat bezogen auf die Querschnittsfläche die größte Biegesteifigkeit, so dass diese Querschnittsform sehr häufig bei Verbundlenkerachsen zur Anwendung kommt. Je größer der Profilquerschnitt ist, desto größer ist auch die Biegesteifigkeit.

In der JP S 58-53504 A wird eine Kraftfahrzeugachse mit einem Querträger mit einem rechteckigen Querschnitt offenbart. Der Querschnitt des Querträgers und zwar sowohl die Höhe als auch die Breite wird graduell variiert. Der Querträger hat den größten Querschnitt in seiner Mitte und der Querschnitt wird kontinuierlich zu den gegenüberliegenden Enden hin vermindert.

Eine ähnliche Kraftfahrzeugachse wird in der WO 2014/138 850 A1 dargestellt, wobei in den Endbereichen des Querträgers dessen freie Kanten nach außen gestellt werden, um die Biegesteifigkeit wieder zu erhöhen.

Jedoch erhöht sich mit dem Profilquerschnitt auch die Rollsteifigkeit des Querträgers. Dies steht aber im Gegensatz zu den Anforderungen, dass die Rollsteifigkeit möglichst gering gehalten werden soll.

Um die Rollsteifigkeit relativ zur Biegesteifigkeit trotz einer Vergrößerung des Profilquerschnitts gering zu halten, wird üblicherweise bei Verbundlenkerachsen die Wandstärke des Querträgers reduziert. Die reduzierte Wandstärke hat eine herabgesetzte Rollsteifigkeit zur Folge. Allerdings kann die Wandstärke nicht beliebig dünn gehalten werden. Eine zu dünne Wandung des Querträgerprofils führt zu einer verschlechterten Schweißbarkeit der Profile. Um die Endbereiche der Querträger steif zu gestalten, ist es üblich, die Endbereiche mit Verstärkungsblechen zu versehen.

Diese werden in der Öffnung des Profils mit diesem verschweißt. Bei zu dünnen Wänden ist eine dauerhaft feste Verschweißung des Profils mit dem Verstärkungsblech nicht mehr möglich. Man ist somit in dem erreichbaren Verhältnis von Spur bzw. Sturzsteifigkeit zur Rollsteifigkeit der Verbundlenkerachse limitiert.

Es ist somit die Aufgabe der vorliegenden Erfindung, eine Kraftfahrzeugachse zur Verfügung zu stellen, die es ermöglicht, die Spur- und Sturzsteifigkeit und die Rollsteifigkeit eine Verbundlenkerachse stärker voneinander zu entkoppeln und die benannten Nachteile aus dem Stand der Technik zu eliminieren. Weiterhin ist es Aufgabe der Erfindung, ein entsprechendes Verfahren zur Herstellung einer solchen Kraftfahrzeugachse vorzuschlagen.

Der gegenständliche Teil der Aufgabe wird gelöst durch eine Kraftfahrzeugachse mit den Merkmalen des Patentanspruchs 1.

Besondere Ausgestaltungen der erfindungsgemäßen Kraftfahrzeugachse sind Gegenstand der untergeordneten Patentansprüche 2 bis 5.

Der verfahrensmäßige Teil der Aufgabe wird gelöst durch ein Verfahren zur Herstellung eines Querträgers für eine Kraftfahrzeugachse nach Anspruch 6.

Bevorzugte Ausgestaltungen des Verfahrens sind in den untergeordneten Ansprüchen 7 bis 10 aufgeführt.

Gegenstand der Erfindung ist eine Kraftfahrzeugachse, umfassend zwei Längslenker und einen diese verbindenden Querträger, wobei der Querträger ein offenes Profil mit U-förmigem Querschnitt mit einem Steg und längsseitig davon abgewinkelten Seitenschenkeln aufweist, wobei die Öffnung des Profils in Einbaulage zur Fahrbahn hinweist. Weiterhin weist der fahrzeugvorderseitige Seitenschenkel in den Endabschnitten des Profils eine gegenüber einem Mittelabschnitt des Profils reduzierte Höhe auf.

Die erfindungsgemäße Kraftfahrzeugachse ist eine Verbundlenkerachse mit grundsätzlich herkömmlichem Konstruktionsbild. Die Achse umfasst zwei Längslenker, die an einem ihrer Enden mit der Karosserie verbunden sind, während das andere Ende des Längslenkers jeweils mit einem Radträger zur Aufnahme des Fahrzeugrades versehen ist. Verbunden werden die beiden Längslenker mit einem Querträger, der ein offenes Profil mit einem U-förmigen Querschnitt aufweist. Das Profil weist dabei einen Steg auf, der im Wesentlichen von dem einen Längslenker zu dem anderen Längslenker reicht. Von diesem Steg sind längsseitig Seitenschenkel abgewinkelt, die die Seitenwände des Querträgerprofils bilden. Unter einem U-förmigen Querschnitt ist hier unter anderem ein rechteckiger Querschnitt oder ein hutförmiger Querschnitt zu verstehen. Die beiden Seitenschenkel begrenzen auch die Öffnung des Profils, die in Einbaulage zur Fahrbahn hinweist.

Durch die reduzierte Höhe des fahrzeugvorderseitigen Seitenschenkels in den Endabschnitten des Profils wird dort die Rollsteifigkeit reduziert. Die Biegesteifigkeit wird durch diese Maßnahme allerdings nicht beeinflusst. Der Profilquerschnitt kann folglich so gewählt werden, dass die Biegesteifigkeit des Querträgerprofils den gewünschten Wert erreicht und sich somit eine hohe Spur- und Sturzsteifigkeit unter Seitenkraft einstellt. Gleichzeitig wird durch die Reduzierung der Höhe des fahrzeugvorderseitigen Seitenschenkels in Endabschnitten des Profils die Rollsteifigkeit der gesamten Achse verkleinert, während die Biegesteifigkeit unangetastet bleibt.

Man erhält also eine neue und zusätzliche Möglichkeit, die Steifigkeiten einer erfindungsgemäßen Kraftfahrzeugachse weitestgehend unabhängig voneinander einzustellen und somit einen weiten Bereich an Konstruktionsvorgaben abdecken zu können.

Gleichzeitig ist es nicht mehr notwendig, die Wandstärken zu variieren oder ohne Not eine geringe Wandstärke zu wählen, so dass die damit verbundenen Schweißprobleme ebenfalls eliminiert sind.

Im Ergebnis erhält man eine in ihren kinematischen Eigenschaften stark verbesserte Kraftfahrzeugachse, die zudem durch die zuverlässige Schweißbarkeit eine höhere Lebensdauer und geringere Ausschussquote in der Herstellung besitzt.

Bevorzugt wird die Höhe des fahrzeugvorderseitigen Seitenschenkels beim Übergang von dem Mittelabschnitt zu den Endabschnitten kontinuierlich variiert.

Dies beinhaltet den Vorteil, dass in den mechanischen Eigenschaften des Querträgers und der Kraftfahrzeugachse über die Länge des Querträgers keine schädlichen Sprünge auftreten. So können beispielsweise Steifigkeitssprünge entlang der Längsachse des Querträgers zu einer verminderten Lebensdauer der gesamten Achse führen, da an diesen Stellen bevorzugt Brüche oder Risse auftreten. Dies wird bei einer kontinuierlichen oder gleichmäßigen Höhenänderung entlang der Längsachse des Querträgers vermieden. Der freie Rand des fahrzeugvorderseitigen Seitenschenkels weist dann bevorzugt eine wellenförmige Kontur auf.

Eine solche wellenförmige Kontur entsteht insbesondere dann, wenn die Höhe des fahrzeugvorderseitigen Seitenschenkels durch längsseitige Ausnehmungen in Form eines Kreissegments oder Ellipsensegments variiert ist. Derartige Ausnehmungen ermöglichen insbesondere eine gleichmäßige Änderung der Steifigkeiten ohne große Steifigkeitssprünge und damit eine Belastung der gesamten Achse ohne schädliche Spannungsspitzen.

Insbesondere die Kombination eines kontinuierlichen Übergangs der Höhe in den Endbereichen des Profils zum Mittelabschnitt mit Ausnehmungen in Form eines Kreissegments oder Ellipsensegments beeinflusst die Spannungsverteilung innerhalb des Querträgerprofils in vorteilhafter Weise.

An den längslenkerseitigen Enden des Querträgers liegt im Wesentlichen die maximale Höhe des zu variierenden Seitenschenkels vor. Die genaue Ausgestaltung des längslenkerseitigen Endes ist aber immer von der konstruktiven Ausgestaltung der Anbindung des Querträgers an dem Längslenker abhängig. Mit zunehmendem Abstand zum jeweiligen Längslenker wird die Höhe des fahrzeugvorderseitigen Seitenschenkels geringer, etwa in Form eines Kreissegments oder Ellipsensegments bis die Höhe des Seitenschenkels einen minimalen Wert erreicht. Danach wächst die Höhe des Seitenschenkels wieder kontinuierlich an bis sie im Mittelabschnitt des Querträgers wieder den maximalen Wert erreicht. Sobald die Höhe des Seitenschenkels in dem Mittelabschnitt des Profils den maximalen Wert erreicht hat, bleibt dieser im Wesentlichen konstant bis der Übergang zu dem anderen Endabschnitt des Profils beginnt.

In einer bevorzugten Ausgestaltung der Erfindung weisen die Endabschnitte eine Länge von bis zu 45 %, bevorzugt bis zu einem Drittel der Länge des Querträgers auf. Durch die Wahl der Länge der Endabschnitte erhält man eine zusätzliche Möglichkeit, die Rollsteifigkeit des Querträgerprofils zu variieren.

In einer weiteren besonderen Ausgestaltung der Erfindung beträgt das Verhältnis der kleinsten Höhe des Seitenschenkels in den Endabschnitten zur Höhe des Seitenschenkels im Mittelabschnitt 0,5 bis 0,9. Bevorzugt beträgt das Verhältnis 0,7 bis 0,8.

Dieses Höhenverhältnis ist ein weiterer wichtiger Parameter mit dessen Hilfe die Rollsteifigkeit im Verhältnis zur Spur- und Sturzsteifigkeit eingestellt werden kann. Wählt man die Höhe der Seitenwand in den Endabschnitten zu gering, wird auch die Rollsteifigkeit zu gering, um eine ausreichende Betriebsfähigkeit der erfindungsgemäßen Kraftfahrzeugachse gewährleisten zu können. Wählt man die Höhenvariation zu klein, so ist keine ausreichende Entkopplung der Steifigkeitsparameter mehr gegeben. Die konkrete Konstruktion wird durch die vorgesehenen Eigenschaften der Kraftfahrzeugachse beeinflusst.

In einer weiteren bevorzugten Ausgestaltung der Erfindung sind die freien Ränder der Seitenschenkel abgewinkelt. Darunter ist zu verstehen, dass das Profil im Querschnitt keine reine U- oder Rechteckform mehr besitzt, sondern vielmehr eine Hutform aufweist.

Weiterhin bevorzugt sind die Seitenschenkel des Querträgers zumindest bereichsweise nach innen verlagert.

Dies hat zur Folge, dass auch über die Länge des Querträgers die Querschnittsfläche und damit das Flächenträgheitsmoment variiert werden kann, was ebenfalls Einstellmöglichkeit der Steifigkeitswerte der erfindungsgemäßen Kraftfahrzeugachse darstellt.

Weiterhin ist Gegenstand der Erfindung ein Verfahren zur Herstellung eines Querträgers für eine Kraftfahrzeugachse mit folgenden Verfahrensschritten:
- Bereitstellen einer Blechplatine,
- Bereichsweises Beschneiden eines längsseitigen Randes der Blechplatine in einem längsseitigen Endbereich, wobei durch den Beschnitt eine Ausnehmung in Form eines Kreissegments oder Ellipsensegments erzeugt wird,
- Umformen der Blechplatine zu einem offenen Profil mit U-förmigem Querschnitt,
- Mechanisches Nachbearbeiten des Profils.

Zur Herstellung einer erfindungsgemäßen Kraftfahrzeugachse wird zunächst eine im Regelfall rechteckige Stahlplatine bereitgestellt. Hier können sämtliche Stahlsorten, die im Fahrwerksbereich Anwendung finden zum Einsatz kommen. Die Blechplatine wird durch zwei längsseitige Ränder und zwei querseitige Ränder begrenzt. Unter den längsseitigen Rändern sind in der Regel die Ränder zu verstehen, die die größere Längenausdehnung aufweisen.

Einer der beiden längsseitigen Ränder wird dann bereichsweise beschnitten. Der Beschnitt findet in einem längsseitigen Endbereich der Platine statt. Durch den Beschnitt wird eine Ausnehmung in Form eines Kreissegments oder Ellipsensegments erzeugt. Beim Umformen der Platine zu einem offenen Profil mit U-förmigem Querschnitt wird ein (in Querrichtung der Platine gesehen) Mittelbereich der Platine zum Steg des Profils geformt, an dem sich längsseitig von dem Steg abgewinkelte Seitenschenkel anschließen. Einer der beiden Seitenschenkel weist dann durch das Beschneiden des längsseitigen Randes der Blechplatine eine in den Endabschnitten bereichsweise reduzierte Höhe auf.

Beim späteren Einbau des Querträgers in die Kraftfahrzeugachse zeigt die Öffnung des Profils nach unten, während der Seitenschenkel mit bereichsweise reduzierter Höhe in Fahrtrichtung weist.

Das umgeformte Profil wird zuletzt noch mechanisch nachbearbeitet. Dies beinhaltet beispielsweise unter anderem das Bearbeiten der Endbereiche des Querträgers um entspreche Anbindungen für die Längslenker der Kraftfahrzeugachse auszubilden. Insbesondere beinhaltet die Nachbearbeitung ein Anprägen zumindest der beschnittenen Bereiche des Randes der Blechplatine, da durch das Beschneiden die Gefahr besteht, dass lebensdauerverringernde Risse entstehen, die durch das Anprägen wieder reduziert werden.

Das Beschneiden der Platine kann beispielsweise in einem Schneideprozess oder auch in einem Stanzprozess vorgenommen werden.

In einer besonderen Ausgestaltung des erfindungsgemäßen Verfahrens wird die Platine in einem längsseitigen Endbereich bevorzugt in einem Bereich, der höchstens 45 % der Länge der Platine entspricht, beschnitten. Höchst bevorzugt erfolgt der Beschnitt in einem Endbereich, der höchstens einem Drittel der Länge der Platine entspricht.

Nach dem Fertigstellen des Bauteils nach diesen Verfahrensschritten ist ein Querträger entstanden, der vorstehend im Zusammenhang mit der erfindungsgemäßen Kraftfahrzeugachse beschrieben wurde. Der in Einbaulage fahrzeugvorderseitige Seitenschenkel des Querträgers weist dann in seinen Endabschnitten eine gegenüber einem Mittelabschnitt reduzierte Höhe auf.

Weiterhin ist vorgesehen, dass in einer besonderen Ausgestaltung der Erfindung die längsseitigen Ränder der Platine nach dem Beschneiden abgewinkelt werden. Von der auf einer Fläche liegenden Platine aus betrachtet, werden die Ränder bevorzugt nach oben von der Auflagefläche weg abgewinkelt. Die Platine wird sodann derart umgeformt, dass der resultierende Profilquerschnitt eine Hutform aufweist. Das bedeutet, dass die freien Ränder der Seitenstege des Profils nach außen von der Profilöffnung weg abstehend ausgebildet sind.

Weiterhin bevorzugt sieht das erfindungsgemäße Verfahren vor, dass die Seitenschenkel des Profils zumindest bereichsweise nach innen verlagert werden. Durch die bereichsweise Verlagerung der Seitenschenkel besteht die Möglichkeit, die mechanischen Eigenschaften des Querträgers weiter zu variieren und insbesondere das Flächenträgheitsmoment zu verändern und die mechanischen Eigenschaften insbesondere über die Länge des Querträgers variieren und einzustellen. Dadurch kann das mechanische Verhalten des Querträgers je nach Anforderung maßgeschneidert werden.

Weitere Ziele, Vorteile und Merkmale der vorliegenden Erfindung ergeben sich aus der Beschreibung des nachfolgenden Ausführungsbeispiels anhand der Zeichnungen. Dabei zeigen:
- Figur 1: eine erfindungsgemäße Kraftfahrzeugachse,
- Figur 2: einen Ausschnitt der erfindungsgemäßen Kraftfahrzeugachse von unten,
- Figur 3: eine Frontansicht eines Abschnitts der erfindungsgemäßen Kraftfahrzeugachse,
- Figur 4: die Position der Querschnitte in Figur 5,
- Figur 5: Querschnitte des Querprofils,
- Figur 6: das Herstellungsverfahren eines Querträgers.

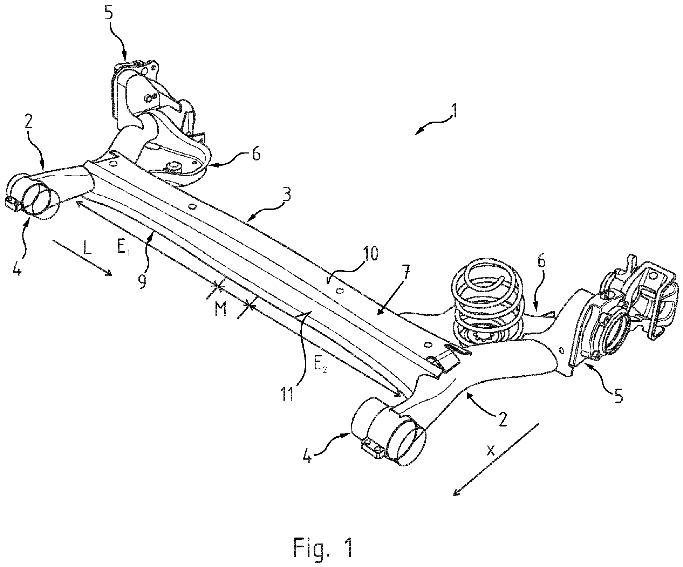

In Figur 1 ist eine erfindungsgemäße Kraftfahrzeugachse 1 dargestellt. Diese Kraftfahrzeugachse 1 umfasst zwei Längslenker 2 sowie einen diese verbindenden Querträger 3. Die Längslenker 2 verfügen jeweils über eine Anbindung 4, mit der sie mit der Karosserie verbunden sind. Außerdem sind sie mit einer Anbindung 5 versehen, die mit dem Radträger verbunden wird.

Darüber hinaus besitzt die Kraftfahrzeugachse 1 Federlager 6, mit denen eine Spiralfeder aufgenommen werden kann.

Der Querträger 3 weist ein offenes Profil 7 mit U-förmigem Querschnitt auf. Das Profil 7 weist einen Steg 10 sowie zwei längsseitig davon abgewinkelte Seitenschenkel 11, 12 auf. Charakteristisch ist hier, dass der fahrzeugvorderseitige Seitenschenkel 11, also der Seitenschenkel der in Fahrtrichtung X weist, in den Endabschnitten E₁, E₂ des Profils 7 eine gegenüber einem Mittelabschnitt M des Profils 7 reduzierte Höhe H aufweist.

Entlang der Länge L des Querträgers 3 erstreckt sich der Endabschnitt E1 von einem Längslenker 2 ausgehend bis zu einem Mittelabschnitt M, der an den Endabschnitt E1 anschließt. Weiter entlang der Länge L des Querträgers 3 schließt sich an den Mittelabschnitt M ein zweiter Endabschnitt E2 an, der seinerseits wiederum zu dem anderen Längslenker 2 reicht.

Die Höhe H des fahrzeugvorderseitigen Seitenschenkels 11 wird über die Länge L des Querträgers kontinuierlich variiert. Von dem einen Längslenker 2 ausgehend sinkt die Höhe H des Seitenschenkels 11 im Endabschnitt E1 nach und nach ab und erreicht eine minimale Höhe h und steigt danach kontinuierlich wieder an. Beim Übergang zum Mittelabschnitt M erreicht die Höhe H ihren maximalen Wert. Beim Übergang in den zweiten Endabschnitt E2 wird die Höhe H dann wieder kontinuierlich reduziert. Der fahrzeugvorderseitige Seitenschenkel 11 nimmt in der dargestellten Ausgestaltung der Erfindung eine Wellenform an. Durch die gleichmäßige Höhenvariation des Seitenschenkels 11 wird eine optimale Spannungsverteilung erreicht. Der hier nicht sichtbare fahrzeugrückseitige Seitenschenkel 12 besitzt über die gesamte Länge L des Querträgers 3 eine gleichbleibende Höhe.

Die größte Ausdehnung des Profilquerschnitts des Querträgers 3 liegt in dem Mittelabschnitt M vor. Diese Ausdehnung des Querschnitts bestimmt die Biegesteifigkeit der Kraftfahrzeugachse 1. Mit steigendem Querschnitt nimmt auch die Biegesteifigkeit zu.

Demgegenüber soll die Rollsteifigkeit der Kraftfahrzeugachse 1 aber möglichst gering verbleiben. Würde die Höhe H des fahrzeugvorderseitigen Seitenschenkels 11 über die Länge L des Querträgers 3 konstant bleiben, würde mit dem Profilquerschnitt auch die Rollsteifigkeit steigen. Durch die Ausnehmungen in den Endabschnitten E₁, E₂ wird die Rollsteifigkeit aber wieder reduziert, so dass ein größeres Verhältnis von Biegesteifigkeit zu Rollsteifigkeit vorliegt, als dies bei konstanter Höhe H des Seitenschenkels 11 der Fall wäre.

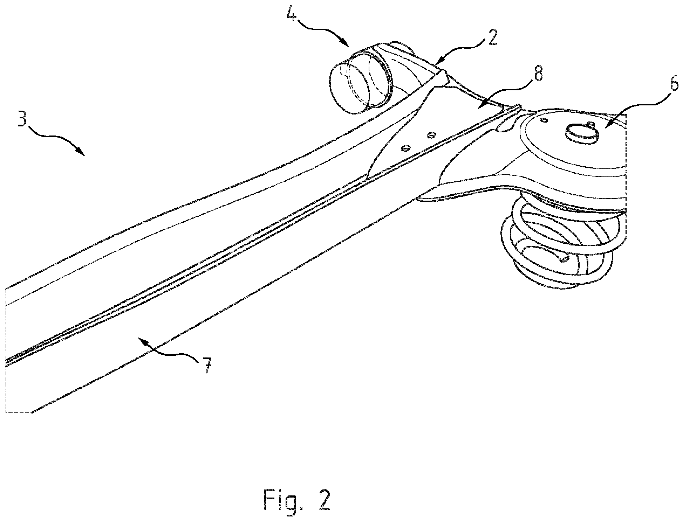

Die Figur 2 zeigt einen Endabschnitt E₁, E₂ einer erfindungsgemäßen Kraftfahrzeugachse 1 von unten. Hier wird deutlich, dass der Querträger 3 neben dem Profil 7 noch ein Verstärkungsblech 8 aufweist. Dieses Verstärkungsblech 8 dient dazu, den Anbindungsbereich des Profils 7 an den Längslenker 2 zu versteifen. Diese Verstärkungsbleche 8 werden üblicherweise mittels einer umlaufenden Schweißnaht stoffschlüssig mit dem Profil 7 verbunden. Damit hier ein über die Lebensdauer der Kraftfahrzeugachsen haltbarer Stoffschluss erzeugt werden kann, ist es notwendig, dass die Wandstärke des Profils 7 ausreichend groß ist. Mit abnehmender Wandstärke steigt die Gefahr, dass zum einen während des Schweißprozesses die Schweißnaht wieder aufreißt oder dass durch eine nicht ausreichend haltbare Schweißnaht die Lebensdauer der Kraftfahrzeugachse 1 stark herabgesetzt wird, da die Schweißnaht während des Betriebs der Kraftfahrzeugachse 1 einreißt.

Bei einer erfindungsgemäßen Kraftfahrzeugachse 1 kann eine ausreichend große Wandstärke für das Profil 7 gewählt werden, da die Rollsteifigkeit der Kraftfahrzeugachse 1 nicht über die Wandstärke reguliert werden muss. Die Rollsteifigkeit wird maßgeblich über die Ausnehmungen 9 in den Endabschnitten E₁, E₂ des Profils 7 eingestellt.

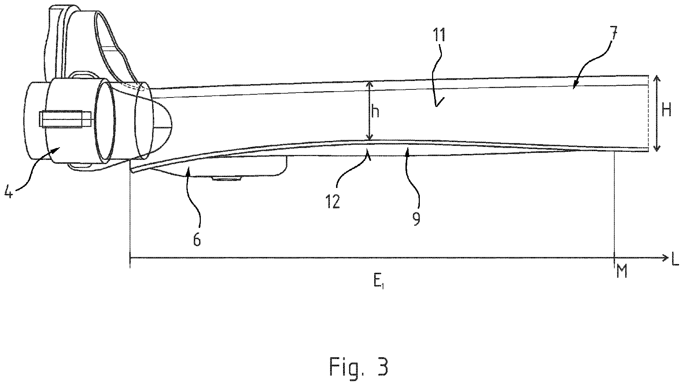

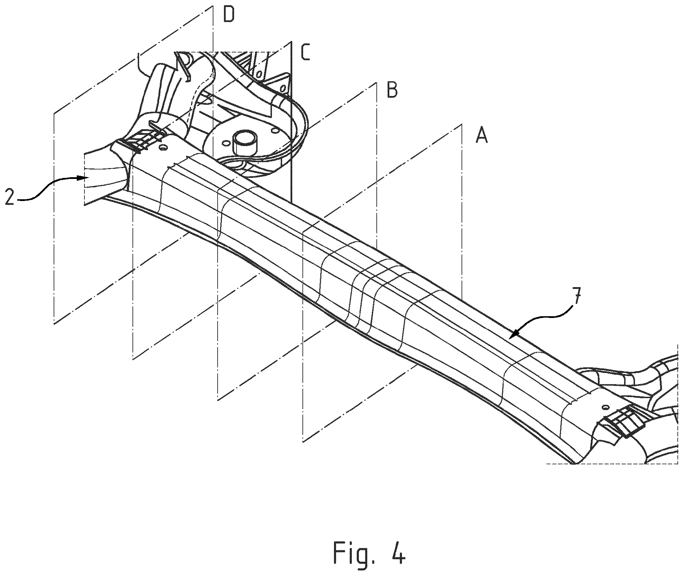

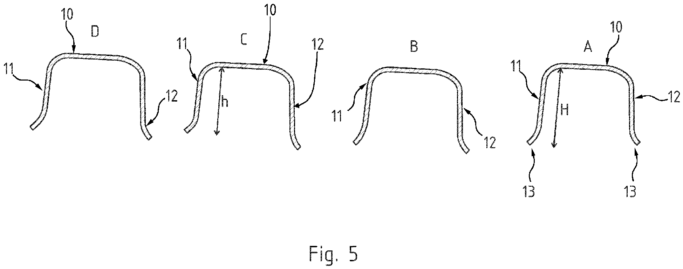

In der Frontansicht (Figur 3) wird noch einmal die Variation der Höhe H des fahrzeugvorderseitigen Seitenschenkels 11 verdeutlicht. In Figur 3 ist eine Hälfte einer erfindungsgemäßen Kraftfahrzeugachse 1 dargestellt. Die Höhe H des Seitenschenkels 11 ändert sich über die Länge L des Profils 7. Die Höhe H des Seitenschenkels 11 wird ausgehend vom längslenkerseitigen Ende des Profils 7 kontinuierlich reduziert, bis sie die kleinste Höhe h erreicht. Danach steigt die Höhe H des Seitenschenkels 11 wieder an bis zu einer maximalen Höhe H im Bereich des Mittelabschnitts M. Die Höhenvariation wird durch eine Ausnehmung 9, die die Form eines Kreissegments oder Ellipsensegments hat, erzeugt. Es ist in Figur 3 auch deutlich zu sehen, dass der fahrzeugrückseitige Seitenschenkel 12 in seiner Höhe nicht verändert wird, sondern diese über die gesamte Länge L konstant bleibt. Um die Variation der Höhe H des fahrzeugvorderseitigen Seitenschenkels 11 nochmals zu verdeutlichen, zeigt Figur 5 mehrere Querschnitte des Profils 7 an unterschiedlichen Stellen des Profils 7. Die Position der Schnitte ist in Figur 4 dargestellt.

Der Schnitt A zeigt den Profilquerschnitt im Mittelabschnitt M des Profils 7. Das Profil 7 weist einen Steg 10 sowie längsseitig davon abgewinkelte Seitenschenkel 11, 12 auf. Die freien Ränder 13 der Seitenschenkel 11, 12 sind nach außen abgewinkelt. Der fahrzeugvorderseitige Seitenschenkel 11 weist hier eine Höhe H auf. Die Öffnung des Profils 7, die von den Seitenschenkeln 11, 12 eingefasst wird, zeigt in Einbaulage in Richtung der Fahrbahn.

Der Schnitt B befindet sich im Endabschnitt E₁ des Profils 7. Hier wird sichtbar, dass der fahrzeugvorderseitige Seitenschenkel 11 nun eine geringere Höhe aufweist als die Höhe H im Mittelabschnitt M des Profils 7. Der fahrzeugrückseitige Seitenschenkel 12 hingegen verbleibt unverändert.

Der Schnitt C zeigt den Profilquerschnitt an der Stelle des Profils 7, wo der fahrzeugvorderseitigen Seitenschenkel 11 seine kleinste Höhe h aufweist. Von diesem Punkt an steigt die Höhe des fahrzeugvorderseitigen Seitenschenkels 11 wieder kontinuierlich an, bis sie im unmittelbaren Anbindungsbereich des Profils 7 mit dem Längslenker 2 wieder einen maximalen Wert angenommen hat (Schnitt D).

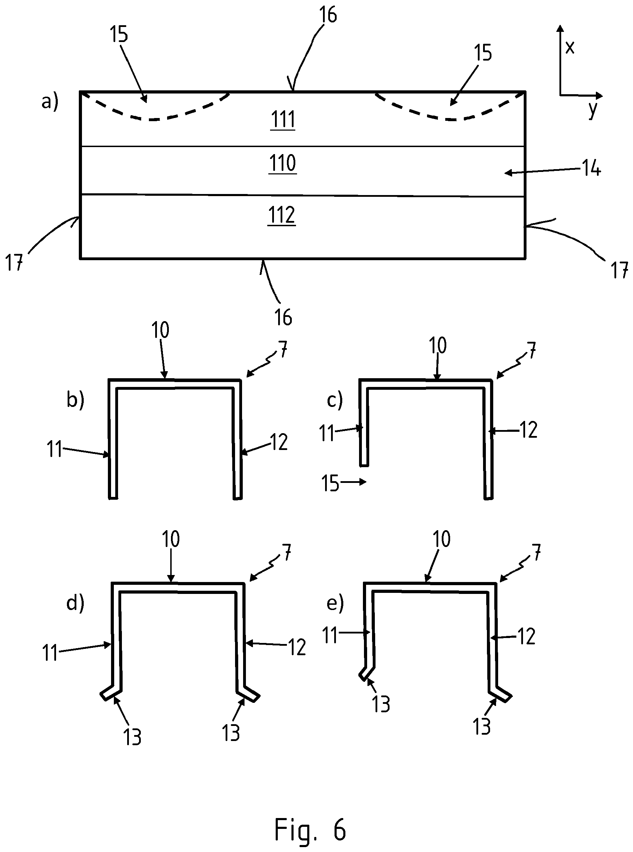

In Figur 6 ist der Herstellungsprozess für einen erfindungsgemäßen Querträger einer Kraftfahrzeugachse 1 dargestellt. Zunächst wird eine Blechplatine 14 bereitgestellt. Die Blechplatine ist dabei durch zwei längsseitige Ränder 16 sowie zwei querseitige Ränder 17 begrenzt. Ein längsseitiger Rand 16 der Blechplatine 14 wird sodann bereichsweise beschnitten, so dass Ausnehmungen 15 an dem längsseitigen Rand 16 der Blechplatine 14 entstehen.

Danach wird die Blechplatine 14 zu einem offenen Profil mit U-förmigem Querschnitt umgeformt. Dies geschieht derart, dass ein in Richtung der Querseite betrachteter mittlerer Bereich 110 zum Steg 10 des U-förmigen Profils 7 umgeformt wird, ein Bereich 111 den fahrzeugvorderseitigen Seitenschenkel 11 und ein Bereich 112 den fahrzeugrückseitigen Seitenschenkel 12 ausbildet.

Die Einteilung der Blechplatine 14 in die jeweiligen Bereiche 111, 110, 112 wird in Figur 6a verdeutlicht. Zur Verdeutlichung sind hier auch noch einmal die Fahrrichtung X und die Querrichtung Y in Bezug auf die Lage der erfindungsgemäßen Kraftfahrzeugachse im Fahrzeug eingezeichnet. Die Figuren 6b und 6d bzw. 6c und 6e stellen Querschnitte durch das fertige U-förmige Profil 7 im Mittelabschnitt bzw. in einem Endabschnitt des erfindungsgemäßen Querträgers 3 dar. Nach dem Umformen zum U-förmigen Profil 7 besitzt der Querträger 3 in seinem Mittelabschnitt einen fahrzeugvorderseitigen Seitenschenkel 11, der in etwa die gleiche Höhe aufweist wie der fahrzeugrückseitige Seitenschenkel 12. In den Endabschnitten hingegen ist der fahrzeugvorderseitige Seitenschenkel 11 mit kleinerer Höhe ausgebildet als der fahrzeugrückseitige Seitenschenkel 12. Dies ist bedingt durch den beschnittenen Bereich 15, wodurch an diesen Stellen eine Ausnehmung in dem Querträger 3 gebildet worden ist.

Das U-förmige Profil 7 wird sodann mechanisch nachbearbeitet. Dazu gehört zum einen ein Beschneiden der Endabschnitte E₁, E₂ um die Anbindung an die Längsträger 2 der Kraftfahrzeugachse 1 gewährleisten zu können sowie ein Bearbeiten des Randes des beschnittenen Bereiches 15 durch beispielsweise ein Anprägen um die Lebensdauer durch eine Vermeidung von Rissquellen in diesem Bereich zu verbessern.

Schließlich können die längsseitigen Ränder 16 wie in den Figuren 6d und e dargestellt, noch zu abgewinkelten Rändern 13 umgeformt werden, um die Eigenschaften der Kraftfahrzeugachse 1 weiter zu verbessern.

### Bezugszeichen:

- 1 -: Kraftfahrzeugachse
- 2 -: Längslenker
- 3 -: Querträger
- 4 -: Anbindung
- 5 -: Anbindung
- 6 -: Federlager
- 7 -: Profil
- 8 -: Verstärkungsblech
- 9 -: Ausnehmung
- 10 -: Steg
- 11 -: Seitenschenkel
- 12 -: Seitenschenkel
- 13 -: Rand
- 14 -: Blechplatine
- 15 -: Ausnehmung
- 16 -: Rand
- 17 -: Rand
- 110 -: Bereich
- 111 -: Bereich
- 112 -: Bereich

- E₁ -: Endabschnitt
- E₂ -: Endabschnitt
- H -: Höhe
- h -: Höhe
- L -: Länge
- M -: Mittelabschnitt
- x -: Fahrrichtung
- y -: Querrichtung

## Patentansprüche

1. Kraftfahrzeugachse (1), umfassend zwei Längslenker (2) und einen diese verbindenden Querträger (3), wobei der Querträger (3) ein offenes Profil mit U-förmigem Querschnitt mit einem Steg (10) und längsseitig davon abgewinkelten Seitenschenkeln (11, 12) aufweist, wobei die Öffnungen des Profils (7) in Einbaulage zur Fahrbahn hinweist, wobei der fahrzeugvorderseitige Seitenschenkel (11) in den Endabschnitten (E₁, E₂) des Profils (7) eine gegenüber einem Mittelabschnitt (M) des Profils (7) reduzierte Höhe (h) aufweist, wobei die Höhe (H) des fahrzeugvorderseitigen Seitenschenkels (11) am Übergang von dem Mittelabschnitt (M) zu den Endabschnitten (E₁, E₂), kontinuierlich variiert, **dadurch gekennzeichnet, dass** die Höhe (H) des fahrzeugvorderseitigen Seitenschenkels (11) durch längsseitige Ausnehmungen (9) in Form eines Kreissegments oder Ellipsensegments variiert ist.

2. Kraftfahrzeugachse nach Anspruch 1, **dadurch gekennzeichnet, dass** die Endabschnitte (E₁, E₂) eine Länge von bis zu 45 % der Länge (L) des Querträgers (3) aufweisen.

3. Kraftfahrzeugachse nach einem oder mehreren der vorstehenden Ansprüche, **dadurch gekennzeichnet, dass** das Verhältnis der kleinsten Höhe (h) des fahrzeugvorderseitigen Seitenschenkels (11) in den Endabschnitten zur Höhe (H) des fahrzeugvorderseitigen Seitenschenkels (11) im Mittelabschnitt (M) 0,5 bis 0,9 ist.

4. Kraftfahrzeugachse nach einem oder mehreren der vorstehenden Ansprüche, **dadurch gekennzeichnet, dass** die freien Ränder (13) der Seitenschenkel (11, 12) abgewinkelt sind.

5. Kraftfahrzeugachse nach einem oder mehreren der vorstehenden Ansprüche, **dadurch gekennzeichnet, dass die** Seitenschenkel (11, 12) des Querträgers (3) zumindest bereichsweise nach innen verlagert sind.

6. Verfahren zur Herstellung eines Querträgers (3) für eine Kraftfahrzeugachse (1), aufweisend folgende Verfahrensschritte:
- Bereitstellen einer Blechplatine (14),
- Bereichsweises Beschneiden eines längsseitigen Randes (16) der Blechplatine (14) in einem längsseitigen Endbereich, wobei durch den Beschnitt eine Ausnehmung (15) in Form eines Kreissegments oder Ellipsensegments erzeugt wird,
- Umformen der Blechplatine (14) zu einem offenen Profil (7) mit U-förmigem Querschnitt,
- Mechanische Nachbearbeitung des Profils (7).

7. Verfahren nach Anspruch 6, **dadurch gekennzeichnet, dass** die Nachbearbeitung ein Anprägen zumindest des beschnittenen Bereiches des Randes der Blechplatine beinhaltet.

8. Verfahren nach Anspruch 6 oder 7, **dadurch gekennzeichnet, dass** die Platine (14) in einem längsseitigen Endbereich, der höchstens 45 % der Länge der Platine (14) entspricht, beschnitten wird.

9. Verfahren nach einem der Ansprüche 6 bis 8, **dadurch gekennzeichnet, dass** die längsseitigen Ränder (13) der Platine (14) nach dem Beschneiden abgewinkelt werden.

10. Verfahren nach einem der Ansprüche 6 bis 9, **dadurch gekennzeichnet, dass** die Seitenschenkel (11, 12) des Profils (7) zumindest bereichsweise nach innen verlagert werden.

## Claims

1. Motor vehicle axle (1), comprising two trailing arms (2) and a crossmember (3) connecting these, wherein the crossmember (3) has an open profile having a U-shaped cross-section with a bar (10) and side legs (11, 12) angled away therefrom longitudinally, wherein the openings of the profile (7) point towards the road in the installation position, wherein the vehicle front-side side leg (11) in the end sections (E₁, E₂) of the profile (7) has a reduced height (h) with respect to a central section (M) of the profile (7), wherein the height (H) of the vehicle front-side side leg (11) on transition from the central section (M) to the end sections (E₁, E₂) continuously varies, **characterised in that** the height (H) of the vehicle front-side side leg (11) is varied by longitudinal-side recesses (9) in the form of a circle segment or ellipsis segment.

2. Motor vehicle axle according to claim 1, **characterised in that** the end sections (E₁, E₂) have a length of up to 45% of the length (L) of the crossmember (3).

3. Motor vehicle axle according to one or more of the preceding claims, **characterised in that** the ratio of the smallest height (h) of the vehicle front-side side leg (11) in the end sections to the height (H) of the vehicle front-side side leg (11) in the central section (M) is 0.5 to 0.9.

4. Motor vehicle axle according to one or more of the preceding claims, **characterised in that** the free edges (13) of the side legs (11, 12) are angled.

5. Motor vehicle axle according to one or more of the preceding claims, **characterised in that** the side legs (11, 12) of the crossmember (3) are displaced inwards at least in regions.

6. Method for producing a crossmember (3) for a motor vehicle axle (1), having the following method steps:
- providing a sheet metal plate (14)
- cutting in regions of a longitudinal-side edge (16) of the sheet metal plate (14) in a longitudinal-side end region, wherein a recess (15) in the form of a circle segment or an ellipsis segment is generated by the cut,
- reforming the sheet metal plate (14) into an open profile (7) having a U-shaped cross-section,
- mechanical post-processing of the profile (7).

7. Method according to claim 6, **characterised in that** the post-processing includes a pressing at least of the cut region of the edge of the sheet metal plate.

8. Method according to claim 6 or 7, **characterised in that** the plate (14) is cut in a longitudinal-side end region which corresponds at most to 45% of the length of the plate (14).

9. Method according to one of claims 6 to 8, **characterised in that** the longitudinal-side edges (13) of the plate (14) are angled after the cutting.

10. Method according to one of claims 6 to 9, **characterised in that** the side legs (11, 12) of the profile (7) are displaced inwards at least in regions.

## Revendications

1. Essieu de véhicule automobile (1), comprenant deux bras oscillants longitudinaux (2) et une traverse (3) reliant ceux-ci, dans lequel la traverse (3) présente un profil ouvert avec une section transversale en forme de U avec une entretoise (10) et des branches latérales (11, 12) s'étendant de manière coudée depuis celle-ci côté longitudinal, dans lequel les ouvertures du profil (7) pointent en position de montage en direction de la chaussée, dans lequel la branche latérale (11) côté avant du véhicule présente, dans les sections d'extrémité (E₁, E₂) du profil (7), une hauteur (h) réduite par rapport à une section centrale (M) du profil (7), dans lequel la hauteur (H) de la branche latérale (11) côté avant du véhicule varie en continu au niveau du passage de la section centrale (M) vers les sections d'extrémité (E₁, E₂), **caractérisé en ce que** la hauteur (H) de la branche latérale (11) côté avant du véhicule varie du fait d'évidements (9) côté longitudinal se présentant sous la forme d'un segment circulaire ou d'un segment elliptique.

2. Essieu de véhicule automobile selon la revendication 1, **caractérisé en ce que** les sections d'extrémité (E₁, E₂) présentent une longueur pouvant atteindre 45 % de la longueur (L) de la traverse (3).

3. Essieu de véhicule automobile selon l'une quelconque ou plusieurs des revendications précédentes, **caractérisé en ce que** le rapport entre la plus petite hauteur (h) de la branche latérale (11) côté avant du véhicule dans les sections d'extrémité et la hauteur (H) de la branche latérale (11) côté avant du véhicule dans la section centrale (M) est de 0,5 à 0,9.

4. Essieu de véhicule automobile selon l'une quelconque ou plusieurs des revendications précédentes, **caractérisé en ce que** les bords (13) libres des branches latérales (11, 12) sont coudés.

5. Essieu de véhicule automobile selon l'une quelconque ou plusieurs des revendications précédentes, **caractérisé en ce que** les branches latérales (11, 12) de la traverse (3) sont déplacées au moins par endroits vers l'intérieur.

6. Procédé servant à fabriquer une traverse (3) pour un essieu de véhicule automobile (1), présentant les étapes de procédé suivantes :
- fourniture d'une platine de tôle (14),
- rognage par endroits d'un bord (16) côté longitudinal de la platine de tôle (14) dans une zone d'extrémité côté longitudinal, dans lequel un évidement (15) sous la forme d'un segment circulaire ou d'un segment elliptique est généré par le rognage,
- façonnage de la platine de tôle (14) en un profil (7) ouvert avec une section transversale en forme de U,
- usinage ultérieur mécanique du profil (7).

7. Procédé selon la revendication 6, **caractérisé en ce que** l'usinage ultérieur inclut un gaufrage d'au moins la zone rognée du bord de la platine de tôle.

8. Procédé selon la revendication 6 ou 7, **caractérisé en ce que** la platine (14) est rognée dans une zone d'extrémité côté longitudinal, qui correspond au maximum à 45 % de la longueur de la platine (14).

9. Procédé selon l'une quelconque des revendications 6 à 8, **caractérisé en ce que** les bords (13) côté longitudinal de la platine (14) sont coudés après le rognage.

10. Procédé selon l'une quelconque des revendications 6 à 9, **caractérisé en ce que** les branches latérales (11, 12) du profil (7) sont déplacées au moins par endroits vers l'intérieur.
